(19) Europäisches Patentamt
European Patent Office
Office européen des brevets

(11) **EP 4 597 167 A1**

(12) **EUROPEAN PATENT APPLICATION**

(43) Date of publication:
06.08.2025 Bulletin 2025/32

(21) Application number: 25153762.7

(22) Date of filing: 24.01.2025

(51) International Patent Classification (IPC):
**G01S 13/75** (2006.01)   **G01S 13/76** (2006.01)
**G01S 5/00** (2006.01)

(52) Cooperative Patent Classification (CPC):
**G01S 13/75; G01S 13/76;** G01S 5/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 02.02.2024 GB 202401373

(71) Applicant: **Nokia Technologies Oy
02610 Espoo (FI)**

(72) Inventors:
• **BARBU, Oana-Elena
Aalborg (DK)**

• **KIILERICH PRATAS, Nuno Manuel
Aalborg (DK)**
• **VEJLGAARD, Benny
9260 Gistrup (DK)**
• **HARREBEK, Johannes
Aalborg (DK)**
• **SVENDSEN, Simon
Aalborg (DK)**

(74) Representative: **Nokia EPO representatives
Nokia Technologies Oy
Karakaari 7
02610 Espoo (FI)**

(54) **AIOT MULTI-POINT POSITIONING METHOD**

(57) An apparatus includes means for measuring a reception time of an activation signal that triggers a reply; means for determining a transmission time of the reply; and means for determining a reception transmission time difference as a difference between the transmission time of the reply and the reception time of the activation signal that triggers the reply.

FIG. 6

EP 4 597 167 A1

**Description**

TECHNICAL FIELD

The examples and non-limiting example embodiments relate generally to communications and, more particularly, to an AIoT multi-point positioning method.

BACKGROUND

It is known for a communication device to gain access to a communication network via an access network node.

SUMMARY

In accordance with an aspect, an apparatus includes means for measuring a reception time of an activation signal that triggers a reply; means for determining a transmission time of the reply; and means for determining a reception transmission time difference as a difference between the transmission time of the reply and the reception time of the activation signal that triggers the reply.

BRIEF DESCRIPTION OF THE DRAWINGS

The foregoing aspects and other features are explained in the following description, taken in connection with the accompanying drawings.

FIG. 1 is a block diagram of one possible and non-limiting system in which the example embodiments may be practiced.

FIG. 2 shows an example topology (topology 1) with communication between a base station and an ambient IoT device.

FIG. 3 shows an example topology (topology 2) with communication between a base station and an intermediate node, and with communication between the intermediate node and an ambient IoT device.

FIG. 4A shows an example topology (topology 3) with downlink assistance.

FIG. 4B shows the example topology (topology 3) with uplink assistance.

FIG. 5 shows an example topology (topology 4) with communication between a UE and an ambient AIoT device.

FIG. 6 is an example signaling diagram, based on the examples described herein.

FIG. 7 is an example apparatus configured to implement the examples described herein.

FIG. 8 shows a representation of an example of non-volatile memory media used to store instructions that implement the examples described herein.

FIG. 9 is an example method, based on the examples described herein.

FIG. 10 is an example method, based on the examples described herein.

FIG. 11 is an example method, based on the examples described herein.

FIG. 12 is an example method, based on the examples described herein.

FIG. 13 is an example method, based on the examples described herein.

FIG. 14 is an example method, based on the examples described herein.

FIG. 15 is an example method, based on the examples described herein.

DETAILED DESCRIPTION OF EXAMPLE EMBODIMENTS

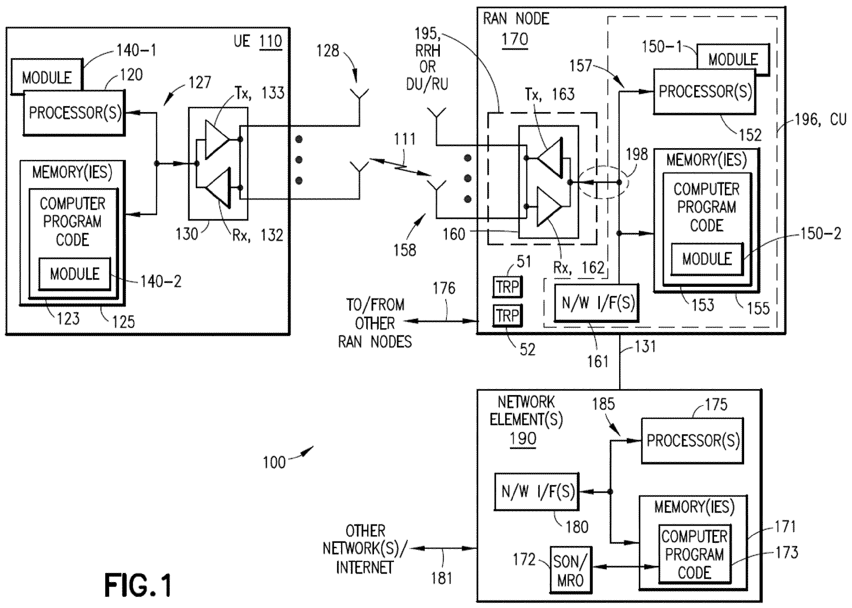

Turning to FIG. 1, this figure shows a block diagram of one possible and non-limiting example in which the examples may be practiced. A user equipment (UE) 110, radio access network (RAN) node 170, and network element(s) 190 are illustrated. In the example of FIG. 1, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

The RAN node 170 in this example is a base station that provides access for wireless devices such as the UE 110 to the wireless network 100. The RAN node 170 may be, for example, a base station for 5G, also called New Radio (NR). In 5G, the RAN node 170 may be a NG-RAN node, which is defined as either a gNB or an ng-eNB. A gNB is a node providing NR user plane and control plane protocol terminations towards the UE, and connected via the NG interface (such as connection 131) to a 5GC (such as, for example, the network element(s) 190). The ng-eNB is a node providing E-UTRA user plane and control plane protocol terminations towards the UE, and connected via the NG interface (such as connection 131) to the 5GC. The NG-RAN node may include multiple gNBs, which may also include a central unit (CU) (gNB-CU) 196 and distributed unit(s) (DUs) (gNB-DUs), of which DU 195 is shown. Note that the DU 195 may include or be coupled to and control a radio unit (RU). The gNB-CU 196 is a logical node hosting radio resource control (RRC), SDAP and PDCP protocols of the gNB or RRC and PDCP protocols of the en-gNB that control the operation of one or more gNB-DUs. The gNB-CU 196 terminates the F1 interface connected with the gNB-DU 195. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU 195 is a logical node hosting RLC, MAC and PHY layers of the gNB or en-gNB, and its operation is partly controlled by gNB-CU 196. One gNB-CU 196 supports one or multiple cells. One cell may be supported with one gNB-DU 195, or one cell may be supported/shared with multiple DUs under RAN sharing. The gNB-DU 195 terminates the F1 interface 198 connected with the gNB-CU 196. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, one or more memories 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU 195, and the one or more buses 157 could be implemented in part as, for example, fiber optic cable or other suitable network connection to connect the other elements (e.g., a central unit (CU), gNB-CU 196) of the RAN node 170 to the RRH/DU 195. Reference 198 also indicates those suitable network link(s).

A RAN node / gNB can comprise one or more TRPs to which the methods described herein may be applied. FIG. 1 shows that the RAN node 170 comprises TRP 51 and TRP 52, in addition to the TRP represented by transceiver 160. Similar to transceiver 160, TRP 51 and TRP 52 may each include a transmitter and a receiver. The RAN node 170 may host or comprise other TRPs not shown in FIG. 1.

A relay node in NR is called an integrated access and backhaul node. A mobile termination part of the IAB node facilitates the backhaul (parent link) connection. In other words, the mobile termination part comprises the functionality which carries UE functionalities. The distributed unit part of the IAB node facilitates the so called access link (child link) connections (i.e. for access link UEs, and backhaul for other IAB nodes, in the case of multi-hop IAB). In other words, the distributed unit part is responsible for certain base station functionalities. The IAB scenario may follow the so called split architecture, where the central unit hosts the higher layer protocols to the UE and terminates the control plane and user plane interfaces to the 5G core network.

It is noted that the description herein indicates that "cells" perform functions, but it should be clear that equipment which forms the cell may perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include location management functions (LMF(s)) and/or access and mobility management function(s) (AMF(S)) and/or user plane functions (UPF(s)) and/or session management function(s) (SMF(s)). Such core network functionality for LTE may include MME (mobility management entity)/SGW (serving gateway) functionality. Such core network functionality may include SON (self-organizing/optimizing network) functionality. These are merely example functions that may be supported by the network element(s) 190, and note that both 5G and LTE functions might be supported. The RAN node 170 is coupled via a link 131 to the network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. Computer program code 173 may include SON and/or MRO functionality 172.

The wireless network 100 may implement network virtualization, which is the process of combining hardware and software network resources and network functionality into a single, software-based administrative entity, or a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, non-transitory memory, transitory memory, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, and 175 may be means for performing functions, such as controlling the UE 110, RAN node 170, network element(s) 190, and other functions as described herein.

In general, the various example embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback devices having wireless communication capabilities, internet appliances including those permitting wireless internet access and browsing, tablets with wireless communication capabilities, head mounted displays such as those that implement virtual/augmented/mixed reality, as well as portable units or terminals that incorporate combinations of such functions. The UE 110 can also be a vehicle such as a car, or a UE mounted in a vehicle, a UAV such as e.g. a drone, or a UE mounted in a UAV. The user equipment 110 may be terminal device, such as mobile phone, mobile device, sensor device etc., the terminal device being a device used by the user or not used by the user.

UE 110, RAN node 170, and/or network element(s) 190, (and associated memories, computer program code and modules) may be configured to implement (e.g. in part) the methods described herein. Thus, computer program code 123, module 140-1, module 140-2, and other elements/features shown in FIG. 1 of UE 110 may implement user equipment related aspects of the examples described herein. Similarly, computer program code 153, module 150-1, module 150-2, and other elements/features shown in FIG. 1 of RAN node 170 may implement gNB/TRP related aspects of the examples described herein. Computer program code 173 and other elements/features shown in FIG. 1 of network element(s) 190 may be configured to implement network element related aspects of the examples described herein.

Having thus introduced a suitable but non-limiting technical context for the practice of the example embodiments, the example embodiments are now described with greater specificity.

Regarding IoT applications, 3GPP has specified NB-IoT/eMTC and NR RedCap before R18 to satisfy the requirements on low cost and low power devices for wide area IoT communication. These IoT devices usually consume tens or hundreds of milliwatts power during transceiving, while the cost is a few dollars. However, to achieve the internet of everything, IoT devices with ten or even a hundred times lower cost and power consumption are needed, especially for a large number of applications requiring batteryless devices.

## 1. Typical use cases

The number of IoT connections has been growing rapidly in recent years and is predicted to be hundreds of billions by 2030. With more and more 'things' expected to be interconnected for improving production efficiency and increasing comforts of life, it demands further reduction of size, cost, and power consumption for IoT devices. In particular, regular replacement of battery for all the IoT devices is impractical due to the tremendous consumption of materials and manpower. It has become a trend to use energy harvested from environments to power IoT devices for self-sustainable communications, especially in applications with a huge number of devices (e.g., ID tags and sensors).

## 2. 3GPP technologies

The most critical issue with existing 3GPP technologies for the target use cases is the capability of cooperating with energy harvesting considering limited device size. Cellular devices usually consume tens or even hundreds of milliwatts power for transceiver processing. Taking NB-IoT module for example, the typical current consumption for receive processing is about 60mA with supply voltage higher than 3.1V, while 70mA for transmitting processing at 0dBm transmit power. Furthermore, the output power provided by a typical energy harvester is mostly below 1 milliwatt, considering the small size of a few square centimeters for practical devices. Since the available power is far less than the consumed power, it is impractical to power cellular devices directly by energy harvesting in most cases.

One possible solution is to integrate energy harvesting with rechargeable battery or supercapacitor. However, there are still a few problems to be solved. Firstly, both rechargeable battery and supercapacitor may suffer from shortened lifetime in practical cases. It is hard to provide constant charging current or voltage by energy harvesting, while longtime continuous charging is needed due to the very small output power from energy harvester. Inconstant charging current and longtime continuous charging are both harmful to battery life. For supercapacitor, its lifetime is to be significantly reduced in high temperature environments (e.g., less than 3 years at 50 degrees centigrade). Secondly, device size is to significantly increase. A small size button battery can only provide current of a few tens of milliamps, battery with much larger size (e.g., AA battery) is usually used to power cellular devices, whose size can be even larger than the module itself. To store energy for a proper duration of working (e.g., one second), the required capacitance of a supercapacitor is at the level of a hundred mill-farads. The size of such supercapacitors may be larger than an NB-IoT module. Thirdly, both rechargeable batteries and supercapacitors can be more expensive than the module itself. Even purchased in large quantities, the cost of a suitable battery or supercapacitor may reach one or a few dollars, which nearly doubles the cost of the device.

## 3. Non-3GPP technologies

RFID is the most well-known technology supporting battery less tags (devices). The power consumption of commercial passive RFID tags can be as low as 1 microwatt. Techniques enabling such low power consumption are envelope detection for downlink data reception, and backscatter communication for uplink data transmission. RFID is designed for short-range communications, whose typical effective range is less than 10 meters. As the air interface of RFID almost remains unchanged since 2005, the too-simple transmission scheme becomes the obstacle of improving its link budget and capability of supporting scalable network.

Attracted by the extremely low power consumption of backscatter communication, many non-3GPP technologies begin to put efforts into related research, such as Wi-Fi, Bluetooth, UWB, and LORA. Various research show that a few or tens of microwatts power consumption can be supported for passive tags based on or with small modifications to the above air interfaces. A significant proportion of the studies are targeting at long range communication. Among them, a LoRa tag implemented with commercial off-the-shelf components can send its sensing data to the receiver 381 meters away. Currently, most of the studies are focusing on independent detailed techniques for various optimization targets. It is hard to see a comprehensive system design fully meeting the requirements of the target use cases. However, the standardization of those technologies is agile and quick, as the industries usually follow some de facto standards. It means that many products in the market may follow even a private standard once it shows competitiveness in some applications.

## 4. 3GPP activities on Ambient IoT

A passive radio is a device that harnesses energy from wireless signals sent on specific carriers and/or bandwidths and charges a simple circuitry that, once activated, emits/reflects a signal which encodes at least the ID of the passive radio. The typical system architecture around a passive radio consists of (1-3):

1. An activator: a device that sends an activation signal targeted at waking up the passive radio.

2. The passive radio: harnesses energy over a range of frequencies and listens for activation signals. Once such a signal is detected, the passive radio emits/reflects a signal which is specific to that radio ID.

3. A reader: a device that listens and detects the passive radio signals. The reader may or may not be collocated with the activator.

A RAN level study item was approved and more recently in RAN#98-e (RP-223396) the following main two types of devices have been identified:

In terms of energy storage, the study will consider the following device characteristics:
- (*Passive*) Pure batteryless devices with no energy storage capability at all, and completely dependent on the availability of an external source of energy
- (*Semi-Passive*) Devices with limited energy storage capability that do not need to be replaced or recharged manually.

Device categorization based on corresponding characteristics (e.g. energy source, energy storage capability, passive/active transmission, etc.) may be discussed during the study, in relation with the relevant use cases. The device's peak power consumption shall be limited by its practical form factor for the intended use cases, and shall consider its energy source.

The objectives of this study item can be grouped into three areas: (i) deployment scenarios; (ii) design targets and (iii) performance assessment. In terms of deployment scenarios it was highlighted the operation in unlicensed spectrum:

- Identify the suitable deployment scenarios and their characteristics, at least for the use cases/services agreed in SA1's "Study on Ambient power-enabled internet of Things", comprising among at least the following aspects
  - Indoor/outdoor environment
  - Basestation characteristics, e.g. macro/micro/pico cells-based deployments
  - Connectivity topologies, including which node(s), e.g. basestation, UE, relay, repeater, etc. can communicate with target devices
  - TDD/FDD, and frequency bands in licensed or unlicensed spectrum
  - Coexistence with UEs and infrastructure in frequency bands for existing 3GPP technologies
  - Device originated and/or device terminated traffic assumption
    a. NOTE: There can be more than one deployment scenario identified for a use case, and a deployment scenario may be common to more than one use case.
    b. NOTE: Where more than one deployment scenario is identified for a use case, the trade-offs between them should also be studied.

(continued)

> c. NOTE: The study shall not prioritize deployment aspects that should be coordinated with SA, e.g. public or private network, with or without CN connection.
>
> d. NOTE: A representative use case can be studied for a group of use cases that have similar requirements.

## 5. Summary of 3GPP agreement so far related to Ambient IoT

In RAN#98e & #99, it was agreed to focus on three device types (1-3): 1. Device A: Passive device with NO energy storage, 2. Device B: Passive device with energy storage, 3. Device C: active device with energy storage.

Design targets for power consumptions: Device A $\leq$ 10 $\mu$W, Device A < Device B < Device C, Device C $\leq$ 1 mW Device complexity design target: Device A: Comparable to UHF RFID, Device A $\leq$ Device B $\leq$ Device C, Device C: Orders-of-magnitude lower than NB-IoT

During RAN#99, the Rapporteur listed the following functionalities that need to be tackled for Ambient IoT in RAN:

> Rapporteur: Assumptions on potentially required functionality to be supported need to be identified for Ambient IoT in RAN. To avoid detailed WG-level analysis, the potential functionalities are expected to be general and to meet the RAN design targets for Ambient IoT air interface. The following potential assumed RAN functionalities were found in the submitted papers (please refer also to design targets above).
>
> (a) Security (authentication, encryption, data integrity, authorization)
>
> (b) Positioning/localization/ranging
>
> (c) Support of channel access regulations associated with unlicensed spectrum.
>
> (d) Coexistence with legacy systems, devices, and network deployments
>
> (e) Energy harvesting signals, and/or use of legacy signals for energy harvesting
>
> (f) Identification and management of devices
>
> (g) Possibility of CN connection, including for sporadic and opportunistic small data between device and core
>
> > • Suggest to send LS to SA on feasibility of solutions with/without CN
>
> (h) Backscattering modulation
>
> (i) Envelope detection in receiver
>
> (j) Non-OFDM waveform in DL, robust against low-accuracy receiver architecture
>
> (k) Compact protocol layers design
>
> (l) Anti-collision methods / random access procedure / tag-reaction load distribution
>
> (m) Interference mitigation (intra-reader, inter-reader, reader - cellular network)
>
> (n) For topology (1) and (2), gNB/UE/intermediate node may need limited full-duplex capability
>
> (o) Mobility management procedures
>
> (p) Communicate with all, a subset, or one of the Ambient IoT devices present
>
> (q) Activation, deactivation of ambient IoT device
>
> (r) NW configuration of signals and channels for communication with Ambient IoT devices
>
> (s) Control of when tag reflects/reacts to a received signal when addressed
>
> (t) DRX
>
> (u) Synchronization scheme robust against low-accuracy receiver architecture
>
> (v) Coverage enhancement techniques with low device complexity

## 6. Agreed topologies in the FS_Ambient_IoT_RAN (TR 38.848)

The following connectivity topologies for Ambient IoT networks and devices were defined for the purposes of the study. In all these topologies, the Ambient IoT device may be provided with a carrier wave from other node(s) either inside or outside the topology. The links in each topology may be bidirectional or unidirectional. BS, UE, assisting node, or intermediate node could be multiple BSs or UEs, respectively. The mixture of indoor and outdoor placement of such nodes is regarded as a network implementation choice.

### 6.1 Topology 1: BS <-> AIoT device

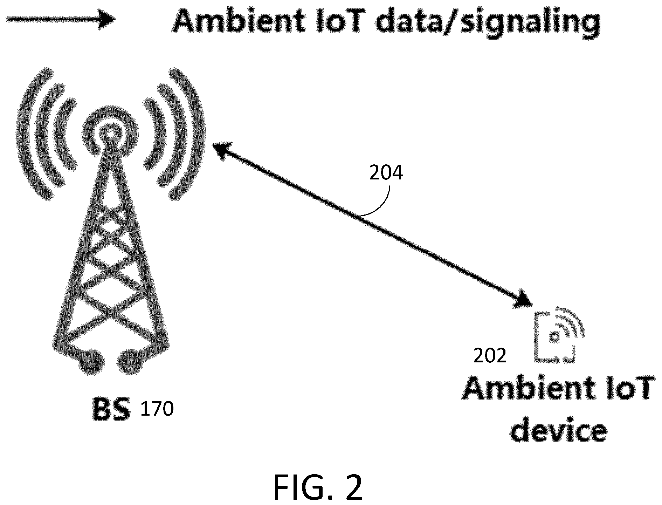

In Topology 1 (depicted in FIG. 2), the Ambient IoT device 202 directly and bidirectionally communicates with a base station 170. The communication between the base station 170 and the ambient IoT device 202 includes Ambient IoT data and/or signaling (204). This topology includes the possibility that the BS transmitting to the Ambient IoT device is a different from the BS receiving from the Ambient IoT device.

### 3.6.2 Topology 2: BS <-> intermediate node <-> AIoT device

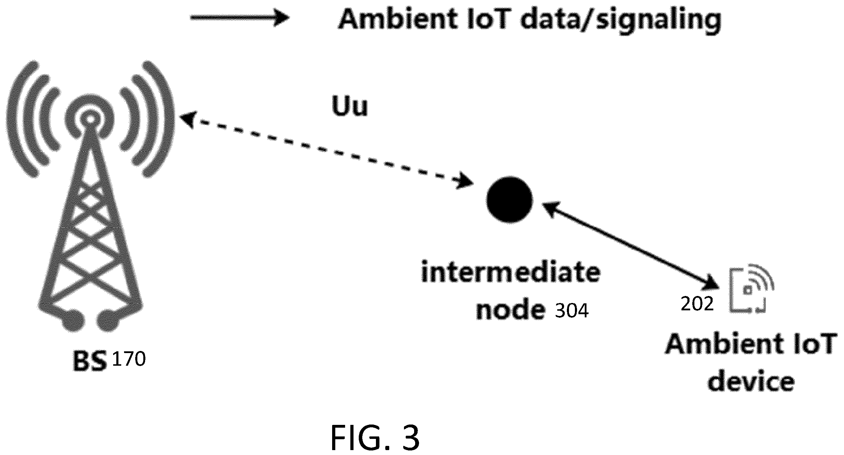

In Topology 2 (depicted in FIG. 3), the Ambient IoT device 202 communicates bidirectionally with an intermediate node 304 between the device 202 and base station 170. In this topology, the intermediate node 304 can be a relay, IAB node, UE 110, repeater, etc. which is capable of Ambient IoT. The intermediate node 304 transfers the information between BS 170 and the Ambient IoT device 202.

### 6.3 Topology 3: BS <-> assisting node <-> AIoT device <-> BS device

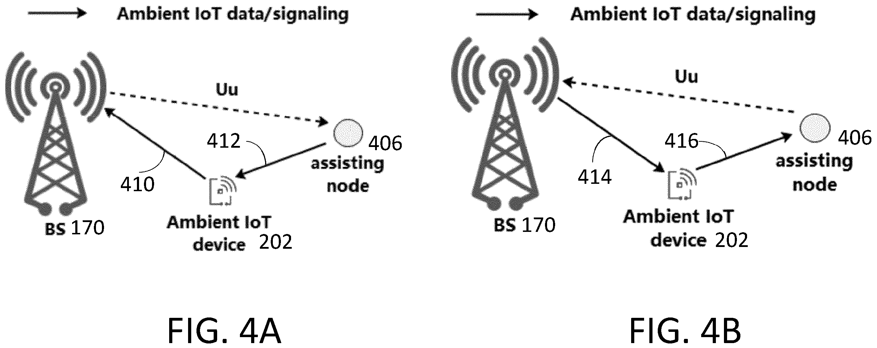

In Topology 3 (depicted in FIG. 4A and FIG. 4B), the Ambient IoT device 202 transmits data/signaling 410 to a base station 170 and receives data/signaling 412 from the assisting node 406; or the Ambient IoT device 202 receives data/signaling 414 from a base station 170 and transmits data/signaling 416 to the assisting node 406. In this topology, the assisting node 406 can be a relay, IAB, UE 110, repeater, etc. which is capable of ambient IoT.

### 6.4 Topology 4: UE <-> AIoT device

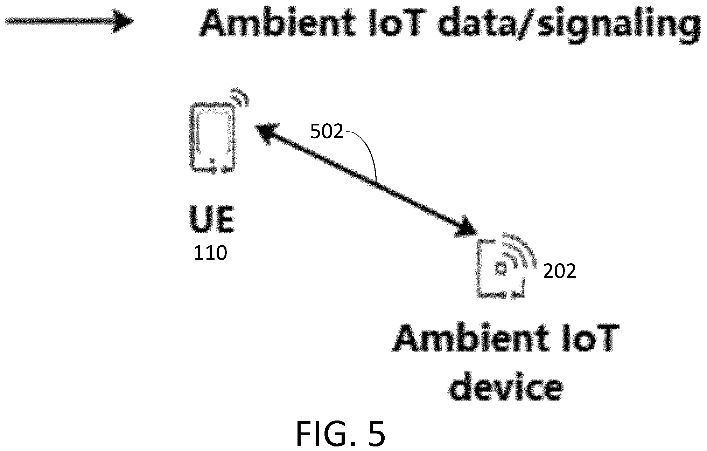

In Topology 4 (depicted in FIG. 5), the Ambient IoT device 202 communicates bidirectionally with a UE 110. The communication between UE 110 and the ambient IoT device 202 includes Ambient IoT data and/or signaling 502.

A method for 5G NR multi-RTT positioning is defined in 3GPP TS 37.355. The method is designed for 5G UEs, where each RTT session is allocated individual resources and no interference is created. However, this method has not been extended to AIOT devices of any of the types.

Localizing an AIOT device requires that the device: (1) either measures and reports positioning signals of multiple sources, or (2) transmits positioning signals detectable and measurable by multiple receivers, after it has been charged and activated.

When synchronization is not possible, the only viable method remains RTT, in which the AIOT device must perform both tasks 1 and 2, one after the other. In addition to signal transmission and measurement, the AIOT device needs to (3) report the RX-TX time difference, over a separate communication channel.

Performing 1, 2, 3 by an AIOT device is challenging since: a) depending on the device type (A, B or C), it may have sufficient charge and/or intelligence to only perform a subset of tasks 1, 2, 3, and b) transmissions from multiple AIOT devices of both positioning signals and RX-TX time difference result in high AIOT cross-interference, since the density of such devices may be many orders of magnitude higher than that of typical NR UEs (and thus orthogonalization in frequency domain is not realistic anymore).

Described herein is an AIOT multi-point positioning method which does not require a known activator location. The method consists of the following elements (1-4):

1. the AIOT device is requested to compute a hybrid RX-TX time difference (HRTTD), where (a-b): a. the RX time is the reception time of the activation signal, while b. the TX time is the transmit time of the AIOT reply. Note that the TX time includes all the delays involved with e.g., charging the device, switching the RX chain to the TX chain, etc. In this way, the activation signal replaces one positioning signal from standard RTT. The AIOT device requires a continuous illumination signal for device type A & B, whereas device type C can operate without continuously illumination source.

2. The AIOT device is requested to encode a quantized hybrid RX-TX time difference in its own reply e.g., by modulating the reply using a bit stream that encodes a quantized version of HRTTD called qHRTTD.

3. The reader is requested to report a hybrid RX-TX time difference where (a-d): a. the RX time is the reception time of the AIOT reply, while b. the TX time is the transmission time of the activation signal by the activator radio, and not by the reader itself. c. To enable this behavior, the activator and reader need to be synchronized, and the reader should be made aware of the TX time of the activation signal. This may be realized by pre-configuration by the NR NW controlling the reading session. d. In addition to its own measured HRTTD, the reader also reports the qHRTTD. In an alternative implementation, the reader may dequantize the qHRTTD itself, and relay this result.

4. The session control unit (e.g., LMF) receives the HRTTD and qHRTTD, dequantizes qHRTTD and computes the difference between them, removing thus the offset due to the propagation delay activator- AIOT device and the offset of the AIOT clock with respect to the reader.

Advantages and technical effects of the herein described examples include AIOT positioning without the need (e.g. no need) to synchronize the AIOT device to the NW time, and that the AIOT device does not need to report the RX-TX time difference explicitly, thus the reporting overhead is minimized. An AIoT device may also be referred to as a tag or tag device.

Solution 1

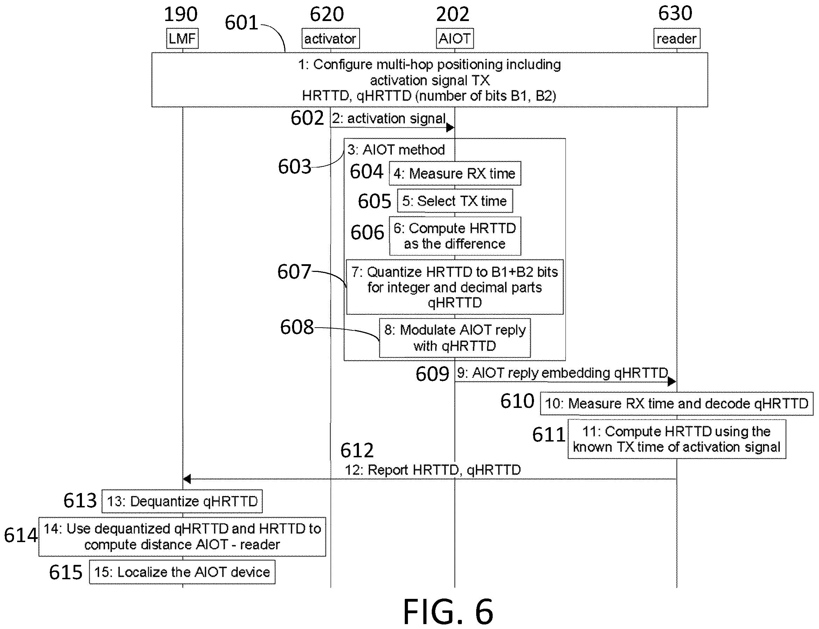

The procedure is shown in the flowchart from FIG. 6, where the new signaling elements are in red, and the new AIOT device method is in purple. Specifically:
Signal 1 (601) elements are new IEs in the LPP Assistance Data. B1 and B2 refer to the number of bits dedicated for the quantization of the integer and decimal parts of the HRTTD computed by the AIOT device. Note that if the activator 620 and/or reader 630 reside in the gNB 170 instead, then the assistance data is sent over NRPPa interface instead. The configuration is performed by the LMF 190 and contains the explicit request for the HRTTD computation 606 by the AIOT device 202 and by the reader 630.
The AIOT HRTTD measurement needs to be standardized, so that the AIOT device 202 understands how to obtain it once the request by the LMF 190 is issued (e.g., new physical layer measurement in TS 38.215). The AIOT HRTTD measurement request may be done by defining a new IE in the LPP RequestLocationInformation.
The definition of AIOT HRTTD may be standardized as the difference between the TX time of the AIOT reply 609 and the RX time of the activation signal (602) which triggers the AIOT reply 609, specifically (i-ii): i) the RX time is the reception time of the activation signal 602, ii) the TX time is the transmit time of the AIOT reply 609. Note that the TX time includes all the delays involved with e.g., charging the device, switching the RX chain to the TX chain, etc. In this way, the activation signal 602 replaces one positioning signal from standard RTT. The AIOT device 202 requires a continuous illumination signal for device type A & B, whereas device type C can operate without a continuous illumination source.
The reader HRTTD measurement also requires standardization (e.g., new physical layer measurement in TS 38.215). The reader HRTTD measurement request may be done by defining a new IE in the LPP RequestLocationInformation.
The definition of the reader HRTTD may be standardized as the difference between the TX time of the activation signal 602 and the RX time of the AIOT reply 609 which was triggered by said activation signal 602, specifically (i-ii): i) the RX time is the reception time of the AIOT reply 609, while ii) the TX time is the transmission time of the activation signal 602 by the activator radio 620, and not by the reader 630 itself.
Signal 12 (612) consists of new IE in the LPP Provide Location Information message. Note that if the activator 620 and/or reader 630 reside in the gNB 170 instead, then the report is sent over NRPPa interface instead. The signal 612 must be received from multiple readers 630 so that the LMF 190 may triangulate/multilaterate the location of the AIOT device 202.
The step-by-step procedure from FIG. 6 is detailed below for the case where the LMF 190 triggers the session.
In step 1, the LMF 190 configures and triggers the session for the activator 620, reader 630 and AIOT device 202. Specifically, via LPP Assistance Information, the LMF 190 configures (a-c): a. The activation signal transmission including time and frequency resources, waveform, etc., b. The AIOT ID which should be localized, c. The IDs of the activator and reader(s) associated with the AIOT device localization. Then, via LPP RequestLocationInformation, the LMF 190 may address the AIOT device 202 and AIOT reader 630 and request the computation of AIOT HRTTD, and respectively reader HRTTD and AIOT qHRTTD.
In step 2 (602), as a result of the above configuration (601), the activator 620 sends the corresponding activation signal which is received at least by the AIOT device 202.
d. Depending on the activator-reader distance, the activation signal may also be received by the reader 630. In particular, the activation signal may be received by the reader 630, if the reader 630 happens to be within the activation coverage. In this case, if the activation signal 602 and the AIoT device signal (609) are overlapping (the tag signal 609 being the signal received from the AIoT device 202), the reader 630 should first cancel the activation signal 602, and then attempt the tag detection. For this to happen, the reader 630 should know the activation signal in advance and apply any interference cancellation method available to subtract the contribution of the activation signal 602 from the total received signal (where the total received signal corresponds to activation signal 602 and AIoT reply 609).
In step 3 (603), in response to the activation signal 602, the AIOT device 202 performs the computation of HRTTD 606 and the generation of the reply embedding the quantized version i.e., qHRTTD - see Solution 3 for details of the step 4 (604), step 5 (605), step 6 (606), step 7 (607), and step 8 (608) of FIG. 6.

In step 10 (610) and step 11 (611), the reader 630 detects the AIOT reply 609 and computes the reader HRTTD as defined above.

In step 11 (611), from the waveform signature of the reply, the reader 630 also reconstructs qHRTTD as a bit vector.

In step 12 (612), the reader 630 uses a new LPP ProvideLocationInformation IE to report both HRTTD and qHRTTD for each detected AIOT device (including AIOT device 202). The report thus contains the tuple: (AIOT device ID; reader HRTTD, AIOT qHRTTD).

In step 13 (613), the LMF 190 dequantizes the qHRTTD, called now AIOT HRTTD.

In step 14 (614), the LMF 190 uses the AIOT HRTTD and the reported reader HRTTD and computes the propagation delay between the AIOT device 202 and the reader 630 as half the difference between the above quantities. It then converts the propagation delay to distance.

Lastly, at step 15 (615), the LMF 190 uses the distances to the different readers to estimate the AIOT device 202 location by state of art localization methods.

Solution 2

In case the AIOT device 202 is only capable of reflecting the activation signal, then the qHRTTD would be fixed regardless of the scenario and approximately 0 for device A and constant, but known value for device B. In this case, the AIOT device 202 can forego method 3 (603) from FIG. 6, and reply only with its ID and/or type (A or B), in case the type cannot be derived from the ID only.

The AIOT device 202, even if it is a pure backscatter, reflects the incoming wave in a pattern that is indicative of the ID of the AIOT device 202. For example, the AIOT device 202 may choose to reflect the incoming signal in an on/off manner, so as to encode the ID in a binary form. This type of encoding could be seen as a form of appending the AIoT device specific information. For an active AIoT device 202, the ID of the AIoT device 202 may be transmitted (e.g. to the reader 630) or appended in a way such that the ID of the AIoT device 202 is carried by an actual payload.

Solution 3

The solution describes the AIOT 202 behavior shown in box 3 (603) of FIG. 6. Specifically (1-8):

1. At 604, the AIOT device 202 measures the reception time of the activation signal 602.

2. The activation signal 602 is transmitted continuously during the positioning session.

3. At 605, the AIOT device 202 selects a slot for transmitting the reply. The later slot is called the TX time.

4. At 606, the device 202 then calculates the difference between the RX time and the TX time, where such difference is called HRTTD.

5. The device 202 normalizes this value to the 5G NR sampling time Ts, i.e.

$$HRTTD := \frac{HRTTD}{T_S}.$$

6. At 607, the AIOT device 202 quantizes HRTTD to a precision of B 1 bits for the integer part, and B2 bits for the decimal part, as pre-configured 601 (either fixed by implementation or configurable, at the start of the positioning session):

$$qHRTTD = quantize(HRTTD, B1, B2).$$

7. At 608, the AIOT device 202 encodes *qHRTTD* in its reply. a. In one embodiment, if the reply's waveform is OOK, then the qHRTTD modulates the train of bits. b. In another embodiment, if the reply waveform is SC-FDM, or OFDM, then (i-ii): i. *qHRTTD* is modulated according to QAM constellation, ii. The complex signals are mapped to one or more subcarriers and converted to a time-domain sum of sinusoids.

8. At 609, the AIOT device 202 transmits its reply (encoding qHRTTD) at the TX instance selected in step 2.

Example (1-6):

1. The AIOT device 202 measures RX time = 6.5Ts, where Ts = 32.55 ns.

2. The AIOT device 202 selects TX time = 12 Ts.

3. The device 202 computes HRTTD = 12TS -6.5Ts = 5.5Ts.

4. The normalization is applied and HRTTD = 5.5.

5. The normalized HRTTD is quantized to B1 = 7 bits for the integer part and B2 = 1 bit for the decimal part, and the result becomes qHRTTD = [0 0 0 0 1 0 1 1].

6. qHRTTD is then modulated and upconverted to carrier and transmitted.

Advantages and technical effects of the examples described herein include AIOT positioning without the need (e.g. no need) to synchronize the AIOT device to the NW, and the AIOT device does not need to report RX-TX time difference explicitly, thus the reporting overhead is minimized.

The examples described herein are relevant for Ambient IoT Rel. 19 SI, and as such are relevant to standardized signaling. The herein described Ambient IoT device estimation reception time of the activation signal may be implemented with an Ambient IoT device (such as a Device Under Test (DUT) Ambient IoT device), gNB and UE reader. The implementation connects a communication device (such as a communication tester) serving as gNB and SCU for configuration and measurement reporting. The SCU also controls a signal generator capable of generating RF signals emulating activation signals and decodes the reflected signals from the AIOT device.

The herein described system is configured as in FIG. 6. The AIOT device measures the reception time of the activation signal. The AIOT device selects a slot for transmitting the reply. The AIOT device transmits its reply (encoding qHRTTD) at the TX instance selected. Based on the reply, the Solution 3 aspect may be implemented.

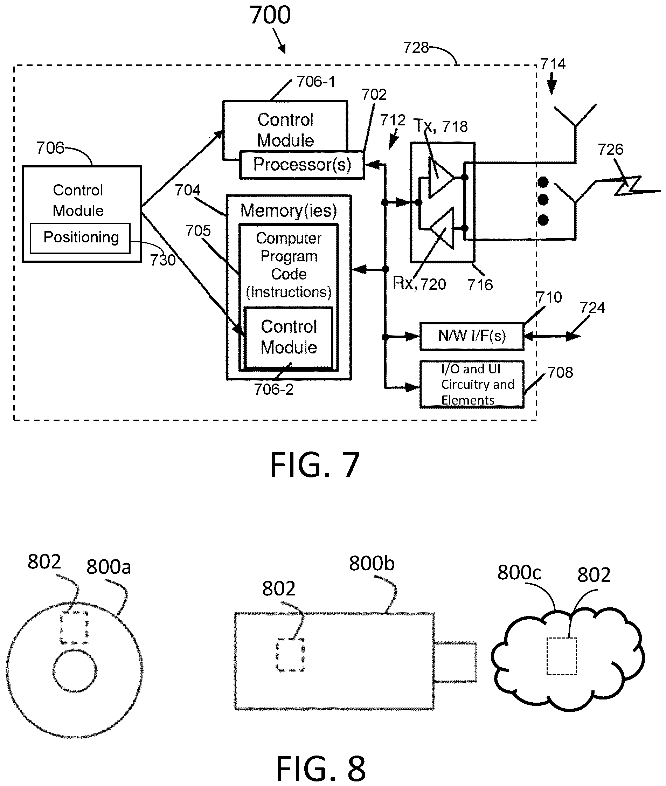

FIG. 7 is an example apparatus 700, which may be implemented in hardware, configured to implement the examples described herein. The apparatus 700 comprises at least one processor 702 (e.g. an FPGA and/or CPU), one or more memories 704 including computer program code 705, the computer program code 705 having instructions to carry out the methods described herein, wherein the at least one memory 704 and the computer program code 705 are configured to, with the at least one processor 702, cause the apparatus 700 to implement circuitry, a process, component, module, or function (implemented with control module 706) to implement the examples described herein. The memory 704 may be a non-transitory memory, a transitory memory, a volatile memory (e.g. RAM), or a non-volatile memory (e.g. ROM).

Positioning 730 may implement the examples described herein directed to AIoT multi-point positioning.

The apparatus 700 includes a display and/or I/O interface 708, which includes user interface (UI) circuitry and elements, that may be used to display aspects or a status of the methods described herein (e.g., as one of the methods is being performed or at a subsequent time), or to receive input from a user such as with using a keypad, camera, touchscreen, touch area, microphone, biometric recognition, one or more sensors, etc. The apparatus 700 includes one or more communication e.g. network (N/W) interfaces (I/F(s)) 710. The communication I/F(s) 710 may be wired and/or wireless and communicate over the Internet/other network(s) via any communication technique including via one or more links 724. The link(s) 724 may be the link(s) 131 and/or 176 from FIG. 1. The link(s) 131 and/or 176 from FIG. 1 may also be implemented using transceiver(s) 716 and corresponding wireless link(s) 726. The communication I/F(s) 710 may comprise one or more transmitters or one or more receivers.

The transceiver 716 comprises one or more transmitters 718 and one or more receivers 720. The transceiver 716 and/or communication I/F(s) 710 may comprise standard well-known components such as an amplifier, filter, frequency-converter, (de)modulator, and encoder/decoder circuitries and one or more antennas, such as antennas 714 used for communication over wireless link 726.

The control module 706 of the apparatus 700 comprises one of or both parts 706-1 and/or 706-2, which may be implemented in a number of ways. The control module 706 may be implemented in hardware as control module 706-1, such as being implemented as part of the one or more processors 702. The control module 706-1 may be implemented also as an integrated circuit or through other hardware such as a programmable gate array. In another example, the control module 706 may be implemented as control module 706-2, which is implemented as computer program code (having corresponding instructions) 705 and is executed by the one or more processors 702. For instance, the one or more memories 704 store instructions that, when executed by the one or more processors 702, cause the apparatus 700 to perform one or more of the operations as described herein. Furthermore, the one or more processors 702, the one or more memories 704, and example algorithms (e.g., as flowcharts and/or signaling diagrams), encoded as instructions, programs, or code, are means for causing performance of the operations described herein.

The apparatus 700 to implement the functionality of control 706 may be UE 110, RAN node 170 (e.g. gNB), or network element(s) 190 (e.g. LMF 190). Thus, processor 702 may correspond to processor(s) 120, processor(s) 152 and/or processor(s) 175, memory 704 may correspond to one or more memories 125, one or more memories 155 and/or one or more memories 171, computer program code 705 may correspond to computer program code 123, computer program code 153, and/or computer program code 173, control module 706 may correspond to module 140-1, module 140-2, module 150-1, and/or module 150-2, and communication I/F(s) 710 and/or transceiver 716 may correspond to transceiver 130, antenna(s) 128, transceiver 160, antenna(s) 158, N/W I/F(s) 161, and/or N/W I/F(s) 180. Alternatively, apparatus 700 and its elements may not correspond to either of UE 110, RAN node 170, or network element(s) 190 and their respective elements, as apparatus 700 may be part of a self-organizing/optimizing network (SON) node or other node, such as a node in a cloud.

Apparatus 700 may also correspond to ambient IoT device 202, intermediate node 304, assisting node 406, activator 620, or reader 630.

The apparatus 700 may also be distributed throughout the network (e.g. 100) including within and between apparatus 700 and any network element (such as a network control element (NCE) 190 and/or the RAN node 170 and/or UE 110).

Interface 712 enables data communication and signaling between the various items of apparatus 700, as shown in FIG. 7. For example, the interface 712 may be one or more buses such as address, data, or control buses, and may include any interconnection mechanism, such as a series of lines on a motherboard or integrated circuit, fiber optics or other optical communication equipment, and the like. Computer program code (e.g. instructions) 705, including control 706 may comprise object-oriented software configured to pass data or messages between objects within computer program code 705, or computer program code (e.g. instructions) 705, including control 706 may include functional, scripting, or procedural code. The apparatus 700 need not comprise each of the features mentioned, or may comprise other features as well. The various components of apparatus 700 may at least partially reside in a common housing 728, or a subset of the various components of apparatus 700 may at least partially be located in different housings, which different housings may include housing 728.

FIG. 8 shows a schematic representation of non-volatile memory media 800a (e.g. computer/compact disc (CD) or digital versatile disc (DVD)) and 800b (e.g. universal serial bus (USB) memory stick) and 800c (e.g. cloud storage for downloading instructions and/or parameters 802 or receiving emailed instructions and/or parameters 802) storing instructions and/or parameters 802 which when executed by a processor allows the processor to perform one or more of the steps of the methods described herein. Instructions and/or parameters 802 may represent a non-transitory computer readable medium.

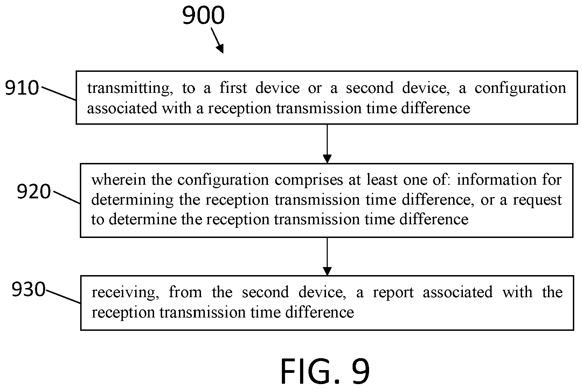

FIG. 9 is an example method 900, based on the example embodiments described herein. At 910, the method includes transmitting, to a first device or a second device, a configuration associated with a reception transmission time difference. At 920, the method includes wherein the configuration comprises at least one of: information for determining the reception transmission time difference, or a request to determine the reception transmission time difference. At 930, the method includes receiving, from the second device, a report associated with the reception transmission time difference. Method 900 may be performed with one or more network elements 190 (e.g. LMF 190) or apparatus 700.

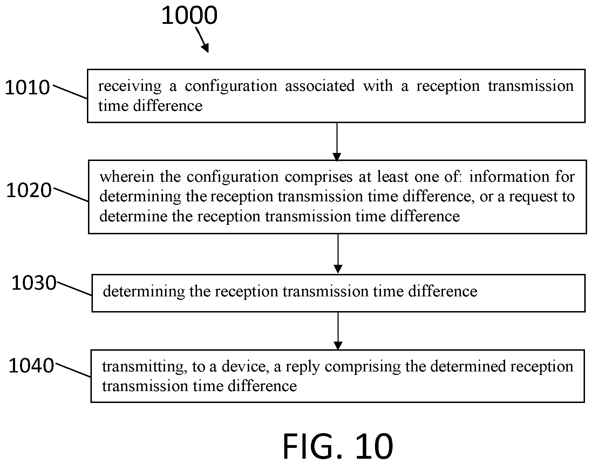

FIG. 10 is an example method 1000, based on the example embodiments described herein. At 1010, the method includes receiving a configuration associated with a reception transmission time difference. At 1020, the method includes wherein the configuration comprises at least one of: information for determining the reception transmission time difference, or a request to determine the reception transmission time difference. At 1030, the method includes determining the reception transmission time difference. At 1040, the method includes transmitting, to a device, a reply comprising the determined reception transmission time difference. Method 1000 may be performed with AIoT device 202 or apparatus 700.

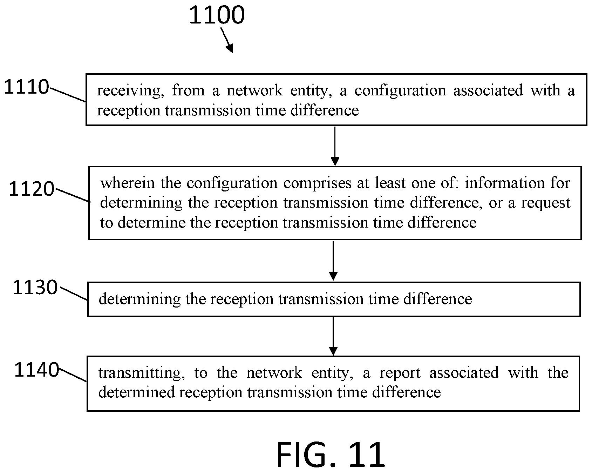

FIG. 11 is an example method 1100, based on the example embodiments described herein. At 1110, the method includes receiving, from a network entity, a configuration associated with a reception transmission time difference. At 1120, the method includes wherein the configuration comprises at least one of: information for determining the reception transmission time difference, or a request to determine the reception transmission time difference. At 1130, the method includes determining the reception transmission time difference. At 1140, the method includes transmitting, to the network entity, a report associated with the determined reception transmission time difference. Method 1100 may be performed with reader 630 or apparatus 700.

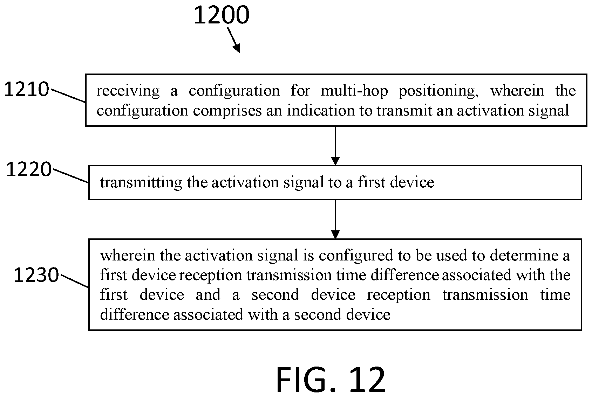

FIG. 12 is an example method 1200, based on the example embodiments described herein. At 1210, the method includes receiving a configuration for multi-hop positioning, wherein the configuration comprises an indication to transmit an activation signal. At 1220, the method includes transmitting the activation signal to a first device. At 1230, the method includes wherein the activation signal is configured to be used to determine a first device reception transmission time difference associated with the first device and a second device reception transmission time difference associated with a second device. Method 1200 may be performed with activator 620 or apparatus 700.

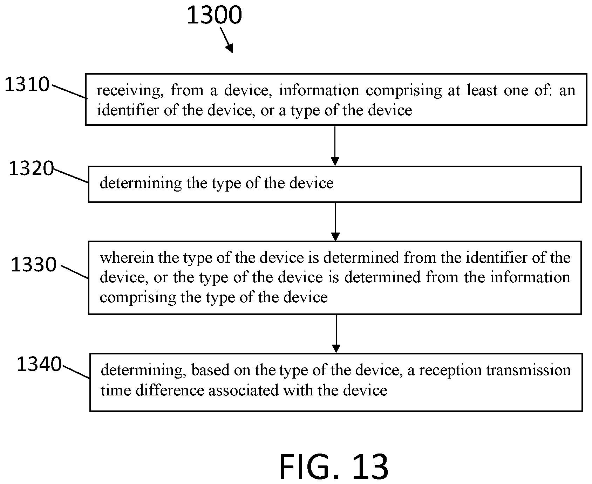

FIG. 13 is an example method 1300, based on the example embodiments described herein. At 1310, the method includes receiving, from a device, information comprising at least one of: an identifier of the device, or a type of the device. At 1320, the method includes determining the type of the device. At 1330, the method includes wherein the type of the device is determined from the identifier of the device, or the type of the device is determined from the information comprising the type of the device. At 1340, the method includes determining, based on the type of the device, a reception transmission time difference associated with the device. Method 1300 may be performed with one or more network elements 190 (e.g. LMF 190), reader 630, or apparatus 700.

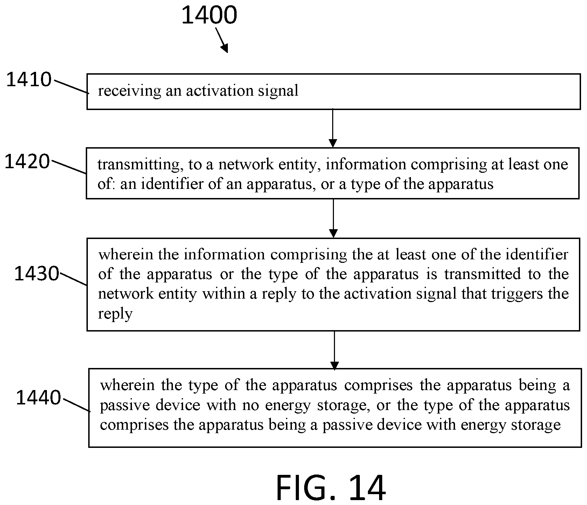

FIG. 14 is an example method 1400, based on the example embodiments described herein. At 1410, the method includes receiving an activation signal. At 1420, the method includes transmitting, to a network entity, information comprising at least one of: an identifier of an apparatus, or a type of the apparatus. At 1430, the method includes wherein the information comprising the at least one of the identifier of the apparatus or the type of the apparatus is transmitted to the network entity within a reply to the activation signal that triggers the reply. At 1440, the method includes wherein the type of the apparatus comprises the apparatus being a passive device with no energy storage, or the type of the apparatus comprises the apparatus being a passive device with energy storage. Method 1400 may be performed with AIoT device 202 or apparatus 700.

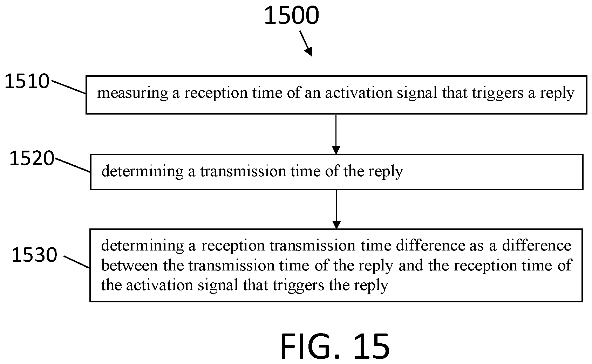

FIG. 15 is an example method 1500, based on the example embodiments described herein. At 1510, the method includes measuring a reception time of an activation signal that triggers a reply. At 1520, the method includes determining a transmission time of the reply. At 1530, the method includes determining a reception transmission time difference as a difference between the transmission time of the reply and the reception time of the activation signal that triggers the reply. Method 1500 may be performed with AIoT device 202 or apparatus 700.

The following examples are provided and described herein.

Example 1. An apparatus including: means for transmitting, to a first device or a second device, a configuration associated with a reception transmission time difference; wherein the configuration comprises at least one of: information for determining the reception transmission time difference, or a request to determine the reception transmission time difference; and means for receiving, from the second device, a report associated with the reception transmission time difference.

Example 2. The apparatus of example 1, wherein: the first device comprises an ambient internet of things (AIoT) device, or an AIoT device comprises the first device, or the second device comprises a reader, or a reader comprises the second device, or the apparatus comprises a location management function (LMF).

Example 3. The apparatus of any of examples 1 to 2, wherein: the report associated with the determined reception transmission time difference is received from the second device within an information element (IE) of a long term evolution positioning protocol (LPP) provide location information message, or the report associated with the determined reception transmission time difference is received from the second device via a new radio positioning protocol A (NRPPa) interface, when at least one of: the report associated with the determined reception transmission time difference is received based on an activation signal transmitted from a gNB, or the second device resides within a gNB.

Example 4. The apparatus of any of examples 1 to 3, wherein the configuration associated with the reception transmission time difference is transmitted within an information element (IE) of a long term evolution positioning protocol (LPP) request location information message.

Example 5. The apparatus of any of examples 1 to 4, wherein the report associated with the determined reception transmission time difference comprises at least one of: information related to a first device reception transmission time difference associated with the first device, or a second device reception transmission time difference associated with the second device.

Example 6. The apparatus of example 5, further including: means for determining the first device reception transmission time difference, based on the information related to the first device reception transmission time difference.

Example 7. The apparatus of any of examples 5 to 6, further including: means for determining a propagation delay between the first device and the second device, based on the first device reception transmission time difference and the second device reception transmission time difference; means for determining a distance between the first device and the second device, based on the propagation delay; and means for determining a location of the first device, based on the distance between the first device and the second device.

Example 8. The apparatus of example 7, further including: means for determining the propagation delay based on a difference between the first device reception transmission time difference and the second device reception transmission time difference.

Example 9. The apparatus of any of examples 7 to 8, further including: means for determining a distance between the first device at least one other device, based on a propagation delay between the first device and the at least one other device; and means for determining the location of the first device, based on the distance between the first device and the at least one other device.

Example 10. The apparatus of any of examples 5 to 9, further including: means for transmitting, to the first device, the request to determine the first device reception transmission time difference; wherein the request to determine the first device reception transmission time difference comprises an indication of a number of bits for an integer part of the first device reception transmission time difference; wherein the request to determine the first device reception transmission time difference comprises an indication of a number of bits for a decimal part of the first device reception transmission time difference; and wherein the information related to the first device reception transmission time difference received from the second device is based on the number of bits for the integer part of the first device reception transmission time difference, and the number of bits for the decimal part of the first device reception transmission time difference.

Example 11. The apparatus of any of examples 1 to 10, further including: means for transmitting, to the first device, an identifier of the second device; and means for transmitting, to the second device, an identifier of the first device.

Example 12. An apparatus including: means for receiving a configuration associated with a reception transmission time difference; wherein the configuration comprises at least one of: information for determining the reception transmission time difference, or a request to determine the reception transmission time difference; means for determining the reception transmission time difference; and means for transmitting, to a device, a reply comprising the determined reception transmission time difference.

Example 13. The apparatus of example 12, further including: means for determining the reception transmission time difference as a difference between a transmission time of the reply and a reception time of an activation signal that triggers the reply.

Example 14. The apparatus of example 13, wherein the transmission time of the reply comprises one or more of: a delay related to charging the apparatus, or a delay related to switching from a receiver chain of the apparatus to a transmission chain of the apparatus.

Example 15. The apparatus of any of examples 12 to 14, further including: means for approximating the reception transmission time difference to generate an approximate reception transmission time difference; and means for transmitting, to the device, the reply comprising the approximate reception transmission time difference.

Example 16. The apparatus of example 15, further including: means for receiving, within the request to determine the reception transmission time difference, an indication of a number of bits for an integer part of the approximate reception transmission time difference; means for receiving, within the request to determine the reception transmission time difference, an indication of a number of bits for a decimal part of the approximate reception transmission time difference; and means for approximating the reception transmission time difference based on the number of bits for the integer part of the approximate reception transmission time difference, and the number of bits for the decimal part of the approximate reception transmission time difference.

Example 17. The apparatus of any of examples 15 to 16, wherein the approximating the reception transmission time difference to generate the approximate reception transmission time difference comprises quantizing the reception transmission time difference to generate a quantized reception transmission time difference, the quantized reception transmission time difference being an approximation of the reception transmission time difference.

Example 18. An apparatus including: means for receiving, from a network entity, a configuration associated with a reception transmission time difference; wherein the configuration comprises at least one of: information for determining the reception transmission time difference, or a request to determine the reception transmission time difference; means for determining the reception transmission time difference; and means for transmitting, to the network entity, a report associated with the determined reception transmission time difference.

Example 19. The apparatus of example 18, further including: means for receiving a reply from a device; means for determining the reception transmission time difference as a difference between a transmission time of an activation signal that triggers the reply and a reception time of the reply; and means for transmitting, to the network entity, the report comprising the reception transmission time difference associated with the apparatus and an approximate reception transmission time difference associated with the device.

Example 20. The apparatus of example 19, further including: means for receiving the reply from the device, wherein the reply comprises the approximate reception transmission time difference associated with the device; and means for reconstructing the approximate reception transmission time difference, based on a waveform signature of the reply received from the device.

Example 21. The apparatus of any of examples 19 to 20, further including: means for receiving the activation signal, when the apparatus is within a coverage area of the activation signal; and means for canceling the activation signal, in response to the activation signal overlapping with the reply received from the device.

Example 22. The apparatus of any of examples 19 to 21, further including: means for transmitting, within the report to the network entity, an identifier of the device.

Example 23. The apparatus of any of examples 19 to 22, further including: means for receiving, from the device, an identifier of the device within the reply received from the device.

Example 24. An apparatus including: means for receiving a configuration for multi-hop positioning, wherein the configuration comprises an indication to transmit an activation signal; and means for transmitting the activation signal to a first device; wherein the activation signal is configured to be used to determine a first device reception transmission time difference associated with the first device and a second device reception transmission time difference associated with a second device.

Example 25. The apparatus of example 24, wherein: the first device reception transmission time difference comprises a difference between a transmission time of a reply from the first device and a reception time of the activation signal that triggers the reply; and the second device reception transmission time difference comprises a difference between a transmission time of the activation signal that triggers the reply and a reception time of the reply from the first device; wherein the apparatus comprises an activator, or an activator comprises the apparatus.

Example 26. A method including: transmitting, to a first device or a second device, a configuration associated with a reception transmission time difference; wherein the configuration comprises at least one of: information for determining the reception transmission time difference, or a request to determine the reception transmission time difference; and receiving, from the second device, a report associated with the reception transmission time difference.

Example 27. A method including: receiving a configuration associated with a reception transmission time difference; wherein the configuration comprises at least one of: information for determining the reception transmission time difference, or a request to determine the reception transmission time difference; determining the reception transmission time difference; and transmitting, to a device, a reply comprising the determined reception transmission time difference.

Example 28. A method including: receiving, from a network entity, a configuration associated with a reception transmission time difference; wherein the configuration comprises at least one of: information for determining the reception transmission time difference, or a request to determine the reception transmission time difference; determining the reception transmission time difference; and transmitting, to the network entity, a report associated with the determined reception transmission time difference.

Example 29. A method including: receiving a configuration for multi-hop positioning, wherein the configuration comprises an indication to transmit an activation signal; and transmitting the activation signal to a first device; wherein the activation signal is configured to be used to determine a first device reception transmission time difference associated with the first device and a second device reception transmission time difference associated with a second device.

Example 30. An apparatus including: at least one processor; and at least one memory storing instructions that, when executed by the at least one processor, cause the apparatus at least to: transmit, to a first device or a second device, a configuration associated with a reception transmission time difference; wherein the configuration comprises at least one of: information for determining the reception transmission time difference, or a request to determine the reception transmission time difference; and receive, from the second device, a report associated with the reception transmission time difference.

Example 31. An apparatus including: at least one processor; and at least one memory storing instructions that, when executed by the at least one processor, cause the apparatus at least to: receive a configuration associated with a reception transmission time difference; wherein the configuration comprises at least one of: information for determining the reception transmission time difference, or a request to determine the reception transmission time difference; determine the reception transmission time difference; and transmit, to a device, a reply comprising the determined reception transmission time difference.

Example 32. An apparatus including: at least one processor; and at least one memory storing instructions that, when executed by the at least one processor, cause the apparatus at least to: receive, from a network entity, a configuration associated with a reception transmission time difference; wherein the configuration comprises at least one of: information for determining the reception transmission time difference, or a request to determine the reception transmission time difference; determine the reception transmission time difference; and transmit, to the network entity, a report associated with the determined reception transmission time difference.

Example 33. An apparatus including: at least one processor; and at least one memory storing instructions that, when executed by the at least one processor, cause the apparatus at least to: receive a configuration for multi-hop positioning, wherein the configuration comprises an indication to transmit an activation signal; and transmit the activation signal to a first device; wherein the activation signal is configured to be used to determine a first device reception transmission time difference associated with the first device and a second device reception transmission time difference associated with a second device.

Example 34. A computer readable medium including instructions stored thereon for performing at least the following: transmitting, to a first device or a second device, a configuration associated with a reception transmission time difference; wherein the configuration comprises at least one of: information for determining the reception transmission time difference, or a request to determine the reception transmission time difference; and receiving, from the second device, a report associated with the reception transmission time difference.

Example 35. A computer readable medium including instructions stored thereon for performing at least the following: receiving a configuration associated with a reception transmission time difference; wherein the configuration comprises at least one of: information for determining the reception transmission time difference, or a request to determine the reception transmission time difference; determining the reception transmission time difference; and transmitting, to a device, a reply comprising the determined reception transmission time difference.

Example 36. A computer readable medium including instructions stored thereon for performing at least the following: receiving, from a network entity, a configuration associated with a reception transmission time difference; wherein the configuration comprises at least one of: information for determining the reception transmission time difference, or a request to determine the reception transmission time difference; determining the reception transmission time difference; and transmitting, to the network entity, a report associated with the determined reception transmission time difference.

Example 37. A computer readable medium including instructions stored thereon for performing at least the following: receiving a configuration for multi-hop positioning, wherein the configuration comprises an indication to transmit an activation signal; and transmitting the activation signal to a first device; wherein the activation signal is configured to be used to determine a first device reception transmission time difference associated with the first device and a second device reception transmission time difference associated with a second device.

Example 38. An apparatus including: means for receiving, from a device, information comprising at least one of: an identifier of the device, or a type of the device; means for determining the type of the device; wherein the type of the device is determined from the identifier of the device, or the type of the device is determined from the information comprising the type of the device; and means for determining, based on the type of the device, a reception transmission time difference associated with the device.

Example 39. The apparatus of example 38, wherein the means for receiving the information comprises means for receiving a reply to an activation signal that conveys the information.

Example 40. The apparatus of example 39, further including: means for determining a pattern of the reply to the activation signal; and means for determining the at least one of the identifier of the device or the type of the device, based on the pattern of the reply to the activation signal.

Example 41. The apparatus of any of examples 39 to 40, wherein: the reply to the activation signal is received in a known pattern; and the means for determining the at least one of the identifier of the device or the type of the device based on the pattern comprises means for inferring, from the known pattern, the at least one of: the identifier of the device or the type of the device.

Example 42. The apparatus of any of examples 38 to 41, further including: means for transmitting, to a network element, a report comprising the determined reception transmission time difference associated with the device.

Example 43. The apparatus of example 42, wherein the report is transmitted within an information element (IE) of a long term evolution positioning protocol (LPP) provide location information message.

Example 44. The apparatus of any of examples 42 to 43, wherein the report is transmitted using a new radio positioning protocol A (NRPPa) interface, in response to at least one of: the information comprising the at least one of the identifier of the device or the type of the device being received based on an activation signal transmitted from a gNB, or the apparatus residing within a gNB.

Example 45. The apparatus of any of examples 42 to 44, wherein the network element comprises a location management function (LMF).

Example 46. The apparatus of any of examples 38 to 45, further including: means for determining the type of the device from the identifier of the device.

Example 47. The apparatus of any of examples 38 to 46, further including: means for determining the reception transmission time difference associated with the device to be substantially equal to zero, in response to determining the type of the device to be a passive device with no energy storage; and means for determining the reception transmission time difference associated with the device to be a known value, in response to determining the type of the device to be a passive device with energy storage.

Example 48. The apparatus of any of examples 38 to 47, wherein: the type of the device is A, when the type of the device comprises the device being a passive device with no energy storage; and the type of the apparatus is B, when the type of the device comprises the device being a passive device with energy storage.

Example 49. The apparatus of any of examples 38 to 48, further including: means for receiving, from the device, a reply to an activation signal, the reply comprising a reflection of an activation signal that triggers the reply; wherein the reply to the activation signal that triggers the reply comprises the information comprising the at least one of: the identifier of the device, or the type of the device.

Example 50. The apparatus of any of examples 38 to 49, wherein: the device comprises an ambient internet of things (AIoT) device, or an ambient internet of things (AIoT) device comprises the device, or the device comprises a reader, or a reader comprises the device.

Example 51. The apparatus of any of examples 38 to 50, wherein: the apparatus comprises a reader, or a reader comprises the apparatus, or the apparatus comprises a location management function (LMF).

Example 52. An apparatus including: means for receiving an activation signal; and means for transmitting, to a network entity, information comprising at least one of: an identifier of the apparatus, or a type of the apparatus; wherein the information comprising the at least one of the identifier of the apparatus or the type of the apparatus is transmitted to the network entity within a reply to the activation signal that triggers the reply; wherein the type of the apparatus comprises the apparatus being a passive device with no energy storage, or the type of the apparatus comprises the apparatus being a passive device with energy storage.

Example 53. The apparatus of example 52, further including: means for transmitting the reply to the activation signal to the network entity as a reflection of the activation signal, the reply to the activation signal being in a pattern that is indicative of the at least one of: the identifier of the apparatus, or the type of the apparatus.

Example 54. The apparatus of any of examples 52 to 53, wherein the type of the apparatus is configured to be used to determine a reception transmission time difference associated with the apparatus.

Example 55. The apparatus of any of examples 52 to 54, wherein the identifier of the apparatus indicates the type of the apparatus.

Example 56. The apparatus of any of examples 52 to 55, wherein: the type of the apparatus is A, when the type of the apparatus comprises the apparatus being the passive device with no energy storage; and the type of the apparatus is B, when the type of the apparatus comprises the apparatus being the passive device with energy storage.

Example 57. The apparatus of any of examples 52 to 56, wherein a reception transmission time difference associated with the apparatus is substantially equal to zero, when the type of the apparatus comprises the apparatus being the passive device with no energy storage.

Example 58. The apparatus of any of examples 52 to 57, wherein a reception transmission time difference associated with the apparatus is a known value, when the type of the apparatus comprises the apparatus being the passive device with energy storage.

Example 59. The apparatus of any of examples 52 to 58, further including: means for encoding the at least one of the identifier of the apparatus or the type of the apparatus in a known pattern, with transmitting the reply to the activation signal to the network entity in the known pattern.

Example 60. The apparatus of any of examples 52 to 59, wherein: the apparatus comprises an ambient internet of things (AIoT) device, or an ambient internet of things (AIoT) device comprises the apparatus.

Example 61. The apparatus of any of examples 52 to 60, wherein: the network entity comprises a reader, or a reader comprises the network entity.

Example 62. The apparatus of any of examples 52 to 61, wherein the activation signal is received from an activator.

Example 63. A method including: receiving, from a device, information comprising at least one of: an identifier of the device, or a type of the device; determining the type of the device; wherein the type of the device is determined from the identifier of the device, or the type of the device is determined from the information comprising the type of the device; and determining, based on the type of the device, a reception transmission time difference associated with the device.

Example 64. A method including: receiving an activation signal; and transmitting, to a network entity, information comprising at least one of: an identifier of an apparatus, or a type of the apparatus; wherein the information comprising the at least one of the identifier of the apparatus or the type of the apparatus is transmitted to the network entity within a reply to the activation signal that triggers the reply; wherein the type of the apparatus comprises the apparatus being a passive device with no energy storage, or the type of the apparatus comprises the apparatus being a passive device with energy storage.

Example 65. An apparatus including: at least one processor; and at least one memory storing instructions that, when executed by the at least one processor, cause the apparatus at least to: receive, from a device, information comprising at least one of: an identifier of the device, or a type of the device; determine the type of the device; wherein the type of the device is determined from the identifier of the device, or the type of the device is determined from the information comprising the type of the device; and determine, based on the type of the device, a reception transmission time difference associated with the device.

Example 66. An apparatus including: at least one processor; and at least one memory storing instructions that, when executed by the at least one processor, cause the apparatus at least to: receive an activation signal; and transmit, to a network entity, information comprising at least one of: an identifier of the apparatus, or a type of the apparatus; wherein the information comprising the at least one of the identifier of the apparatus or the type of the apparatus is transmitted to the network entity within a reply to the activation signal that triggers the reply; wherein the type of the apparatus comprises the apparatus being a passive device with no energy storage, or the type of the apparatus comprises the apparatus being a passive device with energy storage.

Example 67. A computer readable medium including instructions stored thereon for performing at least the following: receiving, from a device, information comprising at least one of: an identifier of the device, or a type of the device; determining the type of the device; wherein the type of the device is determined from the identifier of the device, or the type of the device is determined from the information comprising the type of the device; and determining, based on the type of the device, a reception transmission time difference associated with the device.

Example 68. A computer readable medium including instructions stored thereon for performing at least the following: receiving an activation signal; and transmitting, to a network entity, information comprising at least one of: an identifier of an apparatus, or a type of the apparatus; wherein the information comprising the at least one of the identifier of the apparatus or the type of the apparatus is transmitted to the network entity within a reply to the activation signal that triggers the reply; wherein the type of the apparatus comprises the apparatus being a passive device with no energy storage, or the type of the apparatus comprises the apparatus being a passive device with energy storage.

Example 69. An apparatus including: means for measuring a reception time of an activation signal that triggers a reply; means for determining a transmission time of the reply; and means for determining a reception transmission time difference as a difference between the transmission time of the reply and the reception time of the activation signal that triggers the reply.

Example 70. The apparatus of example 69, wherein the activation signal is received continuously during a positioning session.

Example 71. The apparatus of any of examples 69 to 70, further including: means for determining the reception transmission time difference as the determined reception transmission time difference divided with a sampling time.

Example 72. The apparatus of example 71, wherein the sampling time comprises a fifth generation new radio sampling time.

Example 73. The apparatus of any of examples 69 to 72, further including: means for approximating the reception transmission time difference to generate an approximate reception transmission time difference.

Example 74. The apparatus of example 73, wherein the approximating the reception transmission time difference to generate the approximate reception transmission time difference comprises quantizing the reception transmission time difference to generate a quantized reception transmission time difference, the quantized reception transmission time difference being an approximation of the reception transmission time difference.

Example 75. The apparatus of any of examples 73 to 74, further including: means for approximating the reception transmission time difference to generate the approximate reception transmission time difference, with a number of bits for an integer part of the approximate reception transmission time difference.

Example 76. The apparatus of example 75, further including: means for determining, based on a configuration, an indication of the number of bits for the integer part of the approximate reception transmission time difference.

Example 77. The apparatus of example 76, further including: means for receiving the configuration from a location management function.

Example 78. The apparatus of any of examples 76 to 77, further including: means for determining the configuration based on an implementation of the apparatus.

Example 79. The apparatus of any of examples 73 to 78, further including: means for approximating the reception transmission time difference to generate the approximate reception transmission time difference, with a number of bits for a decimal part of the approximate reception transmission time difference.

Example 80. The apparatus of example 79, further including: means for determining, based on a configuration, an indication of the number of bits for the decimal part of the approximate reception transmission time difference.

Example 81. The apparatus of example 80, further including: means for receiving the configuration from a location management function.

Example 82. The apparatus of any of examples 80 to 81, further including: means for determining the configuration based on an implementation of the apparatus.

Example 83. The apparatus of any of examples 73 to 82, further including: means for encoding, within the reply, the approximate reception transmission time difference.

Example 84. The apparatus of example 83, further including: means for transmitting, to a reader at the selected transmission time of the reply, the reply comprising the encoded approximate reception transmission time difference.

Example 85. The apparatus of any of examples 73 to 84, further including: means for modulating the approximate reception transmission time difference based on bits used for the approximate reception transmission time difference, when a waveform of the reply is based on on-off keying.

Example 86. The apparatus of example 85, wherein the bits used for the approximate reception transmission time difference comprise bits for an integer part of the approximate reception transmission time difference.

Example 87. The apparatus of any of examples 85 to 86, wherein the bits used for the approximate reception transmission time difference comprise bits for a decimal part of the approximate reception transmission time difference.

Example 88. The apparatus of any of examples 73 to 87, further including: means for modulating the approximate reception transmission time difference based on a quadrature amplitude modulation constellation, when a waveform of the reply is based on single carrier frequency division multiplexing.

Example 89. The apparatus of any of examples 73 to 88, further including: means for modulating the approximate reception transmission time difference based on a quadrature amplitude modulation constellation, when a waveform of the reply is based on orthogonal frequency division multiplexing.

Example 90. The apparatus of any of examples 73 to 89, further including: means for mapping the approximate reception transmission time difference to one or more subcarriers.

Example 91. The apparatus of any of examples 73 to 90, further including: means for converting the approximate reception transmission time difference to a time-domain sum of sinusoids.

Example 92. The apparatus of any of examples 69 to 91, wherein the apparatus comprises an ambient internet of things device.

Example 93. The apparatus of any of examples 69 to 92, wherein an ambient internet of things device comprises the apparatus.

Example 94. A method including: measuring a reception time of an activation signal that triggers a reply; determining a transmission time of the reply; and determining a reception transmission time difference as a difference between the transmission time of the reply and the reception time of the activation signal that triggers the reply.

Example 95. An apparatus including: at least one processor; and at least one memory storing instructions that, when executed by the at least one processor, cause the apparatus at least to: measure a reception time of an activation signal that triggers a reply; determine a transmission time of the reply; and determine a reception transmission time difference as a difference between the transmission time of the reply and the reception time of the activation signal that triggers the reply.

Example 96. A computer readable medium including instructions stored thereon for performing at least the following: measuring a reception time of an activation signal that triggers a reply; determining a transmission time of the reply; and determining a reception transmission time difference as a difference between the transmission time of the reply and the reception time of the activation signal that triggers the reply.

References to a 'computer', 'processor', etc. should be understood to encompass not only computers having different architectures such as single/multi-processor architectures and sequential or parallel architectures but also specialized circuits such as field-programmable gate arrays (FPGAs), application specific circuits (ASICs), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

The memories as described herein may be implemented using any suitable data storage technology, such as semiconductor based memory devices, flash memory, magnetic memory devices and systems, optical memory devices and systems, non-transitory memory, transitory memory, fixed memory and removable memory. The memories may comprise a database for storing data.

As used herein, the term 'circuitry' may refer to the following: (a) hardware circuit implementations, such as implementations in analog and/or digital circuitry, and (b) combinations of circuits and software (and/or firmware), such as (as applicable): (i) a combination of processor(s) or (ii) portions of processor(s)/software including digital signal processor(s), software, and memories that work together to cause an apparatus to perform various functions, and (c) circuits, such as a microprocessor(s) or a portion of a microprocessor(s), that require software or firmware for operation, even if the software or firmware is not physically present. As a further example, as used herein, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

It should be understood that the foregoing description is only illustrative. Various alternatives and modifications may be devised by those skilled in the art. For example, features recited in the various dependent claims could be combined with each other in any suitable combination(s). In addition, features from different example embodiments described above could be selectively combined into a new example embodiment. Accordingly, this description is intended to embrace all such alternatives, modifications and variances which fall within the scope of the appended claims.

The following acronyms and abbreviations that may be found in the specification and/or the drawing figures are given as follows (the abbreviations and acronyms may be appended/combined with each other or with other characters using e.g. a dash, hyphen, slash, letter, or number, and may be case insensitive):

| | |
|---|---|
| 3GPP | third generation partnership project |
| 4G | fourth generation |
| 5G | fifth generation |
| 5GC | 5G core network |
| AMF | access and mobility management function |
| AIOT | ambient IoT |
| ASIC | application-specific integrated circuit |
| B1 | number of bits dedicated for the quantization of the integer part of the hybrid reception transmission time difference |

| | | |
|---|---|---|
| B2 | number of bits dedicated for the quantization of the decimal part of the hybrid reception transmission time difference | |
| BS | base station | |
| CD | compact/computer disc | |
| CN | core network | |
| CPU | central processing unit | |
| CU | central unit or centralized unit | |
| DL | downlink | |
| DRX | discontinuous reception | |
| DSP | digital signal processor | |
| DU | distributed unit | |
| DUT | device under test | |
| DVD | digital versatile disc | |
| eMTC | enhanced machine type communication | |
| eNB | evolved Node B (e.g., an LTE base station) | |
| EN-DC | E-UTRAN new radio - dual connectivity | |
| en-gNB | node providing NR user plane and control plane protocol terminations towards the UE, and acting as a secondary node in EN-DC | |
| E-UTRA | evolved UMTS terrestrial radio access, i.e., the LTE radio access technology | |
| E-UTRAN | E-UTRA network | |
| F1 | interface between the CU and the DU | |
| FDD | frequency division duplex | |
| FPGA | field-programmable gate array | |
| FS | feasibility study | |
| gNB | base station for 5G/NR, i.e., a node providing NR user plane and control plane protocol terminations towards the UE, and connected via the NG interface to the 5GC | |
| HRTTD | hybrid reception transmission time difference | |
| IAB | integrated access and backhaul | |
| ID | identifier | |
| IE | information element | |
| IEEE | Institute of Electrical and Electronics Engineers | |
| I/F | interface | |
| I/O | input/output | |
| IoT | internet of things | |
| LMF | location management function | |
| LORA, LoRa | long range, or standardized communication protocol of the International Telecommunication Union | |
| LPP | LTE positioning protocol | |
| LS | liaison statement | |
| LTE | long term evolution (4G) | |
| MAC | medium access control | |
| MME | mobility management entity | |
| MRO | mobility robustness optimization | |
| NB-IoT | narrowband internet of things | |
| NCE | network control element | |
| ng or NG | new generation | |
| ng-eNB | new generation eNB | |
| NG-RAN | new generation radio access network | |
| NR | new radio | |
| NRPPa | NR positioning protocol A | |
| N/W | network | |
| NW | network | |
| OFDM | orthogonal frequency division multiplexing | |
| OOK | on-off keying | |
| PDA | personal digital assistant | |
| PDCP | packet data convergence protocol | |
| PHY | physical layer | |
| QAM | quadrature amplitude modulation | |
| qHRTTD | quantized hybrid reception transmission time difference | |

| R | release (e.g. R18) |
| RAM | random access memory |
| RAN | radio access network |
| RAN# | RAN meeting or document |
| RedCap | reduced capability |
| Rel | release |
| RF | radio frequency |
| RFID | radio frequency identification or identifier |
| RLC | radio link control |
| ROM | read-only memory |
| RP | RAN plenary |
| RRC | radio resource control |
| RTT | round trip time |
| RU | radio unit |
| Rx, RX | receive, or receiver, or reception |
| SA | standalone |
| SA1 | system aspects working group 1 |
| SC-FDM | single carrier frequency division multiplexing |
| SCU | session control unit |
| SDAP | service data adaptation protocol |
| SGW | serving gateway |
| SI | study item |
| SMF | session management function |
| SON | self-organizing/optimizing network |
| TDD | time division duplex |
| TR | technical report |
| TRP | transmission reception point |
| TS | technical specification |
| Tx, TX | transmit, or transmitter, or transmission |
| UAV | unmanned aerial vehicle |
| UE | user equipment (e.g., a wireless, typically mobile device) |
| UHF | ultra high frequency |
| UI | user interface |
| UMTS | Universal Mobile Telecommunications System |
| UPF | user plane function |
| USB | universal serial bus |
| UTRAN | UMTS terrestrial radio access network |
| UWB | ultra wideband |
| WG | working group |
| Wi-Fi | family of wireless network protocols based on the IEEE 802.11 family of standards |
| X2 | network interface between RAN nodes and between RAN and the core network |
| Xn | network interface between NG-RAN nodes |

**Claims**

1. An apparatus comprising:

    means for measuring a reception time of an activation signal that triggers a reply;
    means for determining a transmission time of the reply; and
    means for determining a reception transmission time difference as a difference between the transmission time of the reply and the reception time of the activation signal that triggers the reply.

2. The apparatus of claim 1, further comprising:
    means for determining the reception transmission time difference as the determined reception transmission time difference divided with a sampling time.

3. The apparatus of any of claims 1 to 2, further comprising:
    means for approximating the reception transmission time difference to generate an approximate reception transmission time difference.

4. The apparatus of claim 3, further comprising:
means for approximating the reception transmission time difference to generate the approximate reception transmission time difference, with a number of bits for an integer part of the approximate reception transmission time difference.

5. The apparatus of claim 4, further comprising:
means for determining, based on a configuration, an indication of the number of bits for the integer part of the approximate reception transmission time difference.

6. The apparatus of any of claims 3 to 5, further comprising:
means for approximating the reception transmission time difference to generate the approximate reception transmission time difference, with a number of bits for a decimal part of the approximate reception transmission time difference.

7. The apparatus of claim 6, further comprising:
means for determining, based on a configuration, an indication of the number of bits for the decimal part of the approximate reception transmission time difference.

8. The apparatus of any of claims 3 to 7, further comprising:
means for encoding, within the reply, the approximate reception transmission time difference.

9. The apparatus of claim 8, further comprising:
means for transmitting, to a reader at the selected transmission time of the reply, the reply comprising the encoded approximate reception transmission time difference.

10. The apparatus of any of claims 3 to 9, further comprising:
means for modulating the approximate reception transmission time difference based on bits used for the approximate reception transmission time difference, when a waveform of the reply is based on on-off keying.

11. The apparatus of any of claims 3 to 10, further comprising:
means for modulating the approximate reception transmission time difference based on a quadrature amplitude modulation constellation, when a waveform of the reply is based on single carrier frequency division multiplexing or orthogonal frequency division multiplexing.

12. The apparatus of any of claims 3 to 11, further comprising:
means for mapping the approximate reception transmission time difference to one or more subcarriers.

13. The apparatus of any of claims 3 to 12, further comprising:
means for converting the approximate reception transmission time difference to a time-domain sum of sinusoids.

14. A method comprising:

measuring a reception time of an activation signal that triggers a reply;
determining a transmission time of the reply; and
determining a reception transmission time difference as a difference between the transmission time of the reply and the reception time of the activation signal that triggers the reply.

15. The method of claim 14, further comprising:
determining the reception transmission time difference as the determined reception transmission time difference divided with a sampling time.

FIG.1

EP 4 597 167 A1

**Ambient IoT data/signaling**

204

202

**BS** 170

**Ambient IoT device**

FIG. 2

EP 4 597 167 A1

FIG. 3

FIG. 4A

FIG. 4B

Ambient IoT data/signaling

UE
110

502

202

Ambient IoT device

FIG. 5

EP 4 597 167 A1

FIG. 6

EP 4 597 167 A1

FIG. 7

FIG. 8

900

910 — transmitting, to a first device or a second device, a configuration associated with a reception transmission time difference

920 — wherein the configuration comprises at least one of: information for determining the reception transmission time difference, or a request to determine the reception transmission time difference

930 — receiving, from the second device, a report associated with the reception transmission time difference

## FIG. 9

1000

1010 — receiving a configuration associated with a reception transmission time difference

1020 — wherein the configuration comprises at least one of: information for determining the reception transmission time difference, or a request to determine the reception transmission time difference

1030 — determining the reception transmission time difference

1040 — transmitting, to a device, a reply comprising the determined reception transmission time difference

FIG. 10

1100

1110 — receiving, from a network entity, a configuration associated with a reception transmission time difference

1120 — wherein the configuration comprises at least one of: information for determining the reception transmission time difference, or a request to determine the reception transmission time difference

1130 — determining the reception transmission time difference

1140 — transmitting, to the network entity, a report associated with the determined reception transmission time difference

FIG. 11

1200

1210 — receiving a configuration for multi-hop positioning, wherein the configuration comprises an indication to transmit an activation signal

1220 — transmitting the activation signal to a first device

1230 — wherein the activation signal is configured to be used to determine a first device reception transmission time difference associated with the first device and a second device reception transmission time difference associated with a second device

FIG. 12

1300

1310 — receiving, from a device, information comprising at least one of: an identifier of the device, or a type of the device

1320 — determining the type of the device

1330 — wherein the type of the device is determined from the identifier of the device, or the type of the device is determined from the information comprising the type of the device

1340 — determining, based on the type of the device, a reception transmission time difference associated with the device

FIG. 13

1400

1410 — receiving an activation signal

1420 — transmitting, to a network entity, information comprising at least one of: an identifier of an apparatus, or a type of the apparatus

1430 — wherein the information comprising the at least one of the identifier of the apparatus or the type of the apparatus is transmitted to the network entity within a reply to the activation signal that triggers the reply

1440 — wherein the type of the apparatus comprises the apparatus being a passive device with no energy storage, or the type of the apparatus comprises the apparatus being a passive device with energy storage

FIG. 14

1500

1510 — measuring a reception time of an activation signal that triggers a reply

1520 — determining a transmission time of the reply

1530 — determining a reception transmission time difference as a difference between the transmission time of the reply and the reception time of the activation signal that triggers the reply

FIG. 15

Europäisches
Patentamt

European
Patent Office

Office européen
des brevets

## EUROPEAN SEARCH REPORT

**Application Number**

EP 25 15 3762

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/009911 A1 (QUALCOMM INC [US]) 2 February 2023 (2023-02-02) * paragraph [0115] - paragraph [0125] * ----- | 1-3,12, 14 | INV. G01S13/75 G01S13/76 |
| X | WO 2021/155210 A1 (IDAC HOLDINGS INC [US]) 5 August 2021 (2021-08-05) * figure 10 * * paragraph [0188] - paragraph [0202] * ----- | 1-15 | ADD. G01S5/00 |
| A | US 2010/060424 A1 (WILD BEN J [US] ET AL) 11 March 2010 (2010-03-11) * paragraph [0029] - paragraph [0031] * ----- | 2,15 | |
| A | DU CAIHUI ET AL: "Timespan-based Backscatter Using a Single COTS Receiver", PROCEEDINGS OF THE GENETIC AND EVOLUTIONARY COMPUTATION CONFERENCE, ACMPUB27, NEW YORK, NY, USA, 18 June 2023 (2023-06-18), pages 450-461, XP059588560, DOI: 10.1145/3581791.3596858 ISBN: 979-8-4007-0119-1 * figures 2, 3 * * Section 3 * ----- | 4-9 | **TECHNICAL FIELDS SEARCHED (IPC)** G01S |
| A | US 2020/412591 A1 (LOPEZ MIGUEL [SE] ET AL) 31 December 2020 (2020-12-31) * paragraph [0129] * * paragraph [0151] - paragraph [0165] * ----- | 10-13 | |

The present search report has been drawn up for all claims

| Place of search | Date of completion of the search | Examiner |
|---|---|---|
| Munich | 18 June 2025 | Bomart, Sébastien |

EPO FORM 1503 03.82 (P04C01)

## ANNEX TO THE EUROPEAN SEARCH REPORT
## ON EUROPEAN PATENT APPLICATION NO.

EP 25 15 3762

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2025

| Patent document cited in search report | Publication date | Patent family member(s) | Publication date |
|---|---|---|---|
| WO 2023009911 A1 | 02-02-2023 | CN 117677864 A | 08-03-2024 |
| | | EP 4377714 A1 | 05-06-2024 |
| | | JP 2024532655 A | 10-09-2024 |
| | | KR 20240037244 A | 21-03-2024 |
| | | TW 202306427 A | 01-02-2023 |
| | | US 2024255635 A1 | 01-08-2024 |
| | | WO 2023009911 A1 | 02-02-2023 |
| WO 2021155210 A1 | 05-08-2021 | BR 112022015132 A2 | 27-09-2022 |
| | | CN 115210596 A | 18-10-2022 |
| | | EP 4097500 A1 | 07-12-2022 |
| | | JP 2023513042 A | 30-03-2023 |
| | | US 2023074373 A1 | 09-03-2023 |
| | | US 2025180690 A1 | 05-06-2025 |
| | | WO 2021155210 A1 | 05-08-2021 |
| US 2010060424 A1 | 11-03-2010 | US 2010060424 A1 | 11-03-2010 |
| | | WO 2009117604 A1 | 24-09-2009 |
| US 2020412591 A1 | 31-12-2020 | EP 3752857 A1 | 23-12-2020 |
| | | US 2020412591 A1 | 31-12-2020 |
| | | WO 2019158196 A1 | 22-08-2019 |

EPO FORM P0459

For more details about this annex : see Official Journal of the European Patent Office, No. 12/82